# EUROPEAN PATENT SPECIFICATION

(11) **EP 1 740 931 B1**
(45) Date of publication and mention of the grant of the patent: **10.10.2007**
(21) Application number: 05743494.6
(22) Date of filing: 28.04.2005
(51) Int. Cl.: G01N 25/16

(54) **METHOD AND APPARATUS FOR THE CONTINUOUS QUALITY CONTROL OF A SHAPE MEMORY ALLOY WIRE**
VERFAHREN UND VORRICHTUNG ZUR KONTINUIERLICHEN QUALITÄTSKONTROLLEEINES DRAHTS AUS EINER LEGIERUNG MIT FORMGEDÄCHTNIS
PROCEDE ET APPAREIL POUR LE CONTROLE QUALITE CONTINU D'UN CABLE EN ALLIAGE A MEMOIRE DE FORME

(30) Priority: 29.04.2004 IT MI20040864
(43) Date of publication of application: 10.01.2007
(73) Proprietor: SAES GETTERS S.p.A., 20020 Lainate (Milano) (IT)
(72) Inventor: SALVAGO, Giovanni, 21040 Gerenzano (VA) (IT); TOIA, Luca, I-21040 Carnago VA (IT)
(74) Representative: Concone, Emanuele
(86) International application number: PCT/IT2005/000244
(87) International publication number: WO 2005/106441

(56) References cited:
- WO-A-99/61668
- DE-A1- 19 647 312
- PATENT ABSTRACTS OF JAPAN vol. 1996, no. 07, 31 July 1996 (1996-07-31) & JP 08 081745 A (KANTO SPECIAL STEEL WORKS LTD), 26 March 1996 (1996-03-26)
- PATENT ABSTRACTS OF JAPAN vol. 1999, no. 04, 30 April 1999 (1999-04-30) & JP 11 000750 A (HONPO MOTOJIRO; O C C CO LTD), 6 January 1999 (1999-01-06)

## Description

The present invention relates to a method and an apparatus for the continuous quality control of a wire made of a shape memory alloy (in the following also defined as "SMA"). It is to be noted that although reference is made in the following to a wire, which is certainly the most important application, the method of the invention is applicable also to other similar shapes with one practically infinite dimension and the other two ones finite and generally small, for example tapes or the like.

As it is known, the shape memory phenomenon lies in the fact that a mechanical part made of an alloy which presents this phenomenon is able to shift, in a very short time and without intermediate equilibrium positions, between two shapes, predetermined during the manufacturing, in response to a temperature change. The phenomenon may occur in the so-called "one way" mode, where the mechanical part can deform in a single direction as a result of the temperature change, for example going from shape B to shape A, whereas the opposite transition from A to B requires the application of a mechanical force; in the so-called "two way" mode, on the contrary, both transitions can be caused by temperature changes.

From JP 08 081745 an apparatus for carrying out the method of producing straight SMA wires comprising the steps of supplying the wire through the apparatus, heating/coating said wire to increase its elastic property, and detecting in-line the elongated part of the wire is known.

It is known that these materials transform their microcrystalline structure passing from a type called martensitic, stable at lower temperatures, to a type called austenitic, stable at higher temperatures, and vice versa. The transformation between the two shapes takes place according to a hysteresis cycle in a temperature-elongation diagram, characterized by four temperature values: during heating, starting from a low temperature wherein the martensitic phase is stable, there is reached a first temperature Aₛ at which the transformation into the austenitic phase begins, and then a second temperature A_{f} which identifies the end of the transformation into the austenitic phase. During cooling, starting from the range of temperature in which the austenitic phase is stable, there is reached a third temperature Mₛ at which the transformation into the martensitic phase starts, and then a fourth temperature M_{f} at which this transformation ends. Diagrams of these hysteresis cycles can be found, for example, in patents US 4,896,955 and EP 0 807 276.

The actual temperatures of the above-mentioned transformations depend on the type of material and the manufacturing process, but for each material these temperatures are always in the order M_{f}< Mₛ, Aₛ< A_{f}, while it may be Mₛ < Aₛ or vice versa according to the rate of the transition between the two phases occurs. Examples of compositions of shape memory alloys can be found in patent US 6,309,184 of the applicant, among which mainly Ni-Ti alloys preferably with Ni 54 ÷ 55,5% by weight and the remaining titanium (traces of other components are allowed).

For practical use, a SMA wire must have several functional and technological characteristics which are estimated with specific tests. The tests typically used to check the characteristics of these wires are the following four:
1. fatigue strength: a sample of wire (for example, a segment of 10 cm) is introduced into an oven, suspended by one end and with a weight hanged at the free end; the weight is chosen according to the diameter of the wire and is generally similar to the load which the wire will have to stand in its real application. By cyclically heating and cooling the sample, it is subjected to a series of elongation and shortening cycles, up to failure;
2. residual set: consists in estimating the net residual set of a sample such as the one of the previous test, tested in the same conditions, but for a number of cycles lower than that causing failure (for example 75% or 90% of the cycles causing failure);
3. hysteresis cycle: used to verify that the wire really performs the elongation and shortening transitions at the temperatures expected for that composition. This test too at present is carried out in the same conditions as the first one;
4. stroke: consists in estimating the percent elongation or shortening of the sample during a transition. Also this last test is carried out in the same conditions and with the same experimental set-up as the first test.

The four tests above are thus all sampling tests, which may be carried out for example on a piece about every kilometer of wire, but while the first two tests are destructive, and thus are necessarily carried out on samples, it would be preferable to be able to carry out tests 3 and 4 continuously. As a matter of fact, carrying out these two latter tests as sampling tests has some drawbacks.

A first drawback is that there could be inhomogeneities in the characteristics of the wire which are not detected, because of the very low sampling frequency along the wire; moreover with the current operating modes these tests are carried out in parallel with the manufacturing process, and thus with increase of time and costs for taking the sample from the manufacturing line and carrying out off-line tests; finally, in industrial manufactures it is better to have wires as long as possible, whereas carrying out the sample tests as described makes it necessary to break the wire into relatively short portions.

The object of the present invention is therefore to provide a method and an apparatus, which overcome the aforesaid drawbacks. This object is achieved through the present invention that, in a first aspect thereof is about a method for the continuous quality control of a shape memory alloy wire or the like, characterized by comprising the following steps:
a) supplying the wire through an apparatus wherein it is subjected to a temperature excursion which covers such a range as to comprise the characteristic transition temperatures of the material the wire is made of;
b) measuring in-line directly or indirectly the length variations of the wire at preset points of said apparatus corresponding to different known temperatures;
c) using the data of temperature and length variation to obtain by points the hysteresis curve of said material in the temperature-elongation diagram.

The main advantage of the present method and of the relevant apparatus is thus to allow to check the characteristics of the wire no longer by sampling but continuously, so that the quality control of the product is carried out on the whole production.

Another considerable advantage derives from the fact that this control is carried out in-line, saving the time and money for taking the samples and carrying out the off-line tests.

These and other advantages and features of the method and of the apparatus according to the present invention will be clear to those skilled in the art from the following detailed description of one embodiment thereof with reference to the attached drawings wherein:

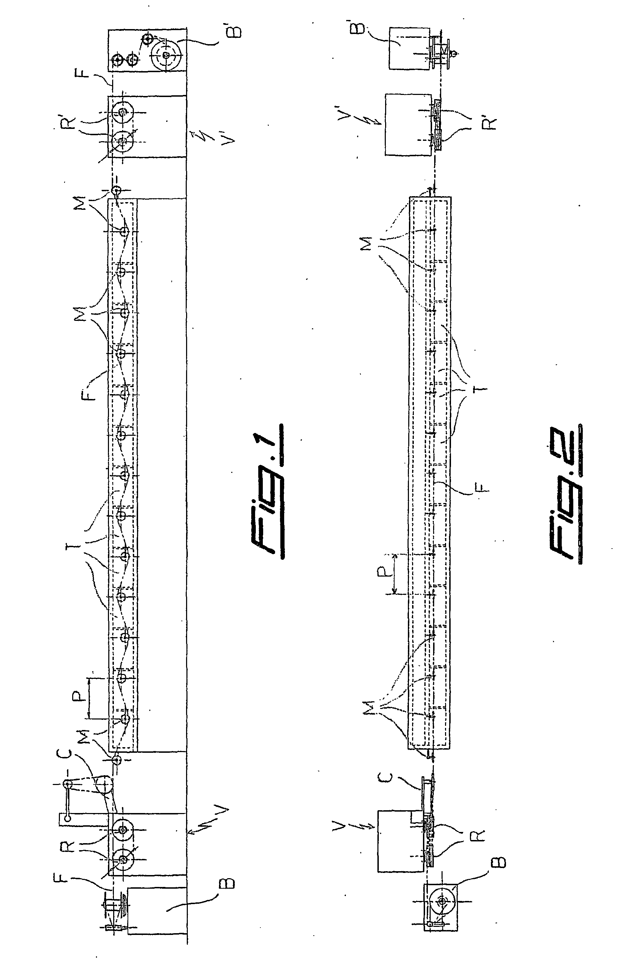

Fig. 1 is a schematic front view of an apparatus which carries out the method according to the present invention; and
Fig. 2 is a schematic top view of the apparatus of fig. 1.

The present method is based on the idea of making the continuous wire pass in a measuring apparatus wherein it is subjected to such a temperature excursion that the above mentioned characteristic transition temperatures are encompassed by the excursion range, and measuring in-line the length variations of the wire during this excursion. Preferably, the temperature of the wire entering and leaving the measuring apparatus is the room temperature, whereas in at least one area of the apparatus the wire is heated to a temperature at least equal to (but preferably higher than) A_{f}. Inside the apparatus it is possible to have a thermal profile that is continuous or discontinuous, "by steps".

In a first embodiment of the method, it is possible to measure directly the elongation of the wire; for example by making the wire slide on support points of the apparatus, the length variations of the wire cause the progressive appearing and disappearing of a sag between said support points, and by measuring said sag it is possible to obtain the length variations which take place between the support points: once the temperatures at these points and the length variations are known, it is possible to obtain the hysteresis curve of the wire.

However, since the elongations are small, it is difficult to accomplish the direct measure thereof, also because it requires the use of optical precision instruments in order not to affect the tension of the wire.

Therefore, in a preferred embodiment the method of the invention consists in measuring the variation of the velocity of the wire while passing between the areas at different temperatures of the system. Considering that a length variation may be expressed as a percentage of the initial length, the variation of the latter when passing from a temperature to another one may be measured as its first derivative with respect to time, i.e. as velocity: more precisely, in the method of the invention there is measured the difference of the velocity of the wire between several points of its run through the apparatus which are at different temperatures. In other words, by supplying the wire at a fixed known velocity, and with a suitable constant tension, through a sequence of areas at different temperatures and measuring the velocity of the wire at each temperature it is possible to obtain the amount of the elongation (or shortening) occurred while passing from a temperature to another. In this way, by integrating the variations of velocity, it is possible to obtain by points the hysteresis curve in the temperature-elongation diagram and to calculate also the stroke in the transition between two temperatures.

In the present measuring method, the measurement of the wire velocity is simpler than the direct measure of the elongations or shortenings to be carried out in the above-described sag method.

In a second aspect thereof, the invention is about an apparatus for carrying out the method of the invention.

An example of an apparatus able to carry out the measure of velocity variations is illustrated in the aforesaid figures, which show a wire F unwound by an input unwinding machine B and wound on a output winding machine B'. The tension of wire F is controlled by a unit V, placed downstream the input unwinding machine B, provided with two drive rollers R, whereon wire F winds a few times, and with a loose arm C that detects the tension on the wire. The tension measurement by means of arm C aims to keep it constant by acting on the control of rollers R, and in case also on that of rollers R' of a unit V' which controls the velocity of the wire and which is placed upstream the output winding machine B'. The units V and V' are both connected for mutual feedback.

Between the two units V, V' is placed a series of thermostatic chambers T in each of which a given temperature is kept constant, by means of known regulation systems, so as to reproduce a certain temperature profile in a discrete manner. In the illustrated example there are provided thirteen chambers T with a temperature "step", i.e. a temperature difference between adjacent chambers, of 20 °C first increasing and then decreasing, in such a way as to obtain a temperature profile that will be 40-60-80-100-120-140-160-120-100-80-60-40 °C.

In each chamber T there is placed an idle pulley M, kept at the chamber temperature and whereon the wire F is wound without sliding, which is used to measure the velocity of wire F through a high-definition encoder which detects the rotational velocity of pulley M with precision. Two further pulleys M, with relevant encoders, are also placed respectively upstream and downstream chambers T for detecting the velocity of the wire at room temperature, which is normally about 20 °C.

By the knowledge of the velocity of wire F in the various chambers T at each temperature and since the pitch P between the pulleys M is known, it is possible to obtain the relation between the temperature of the wire and the elongation thereof. The measured parameters are continuously recorded in real time by means of suitable known means, and it is preferable to provide also wire marking means which are automatically activated if the measured parameters reach values outside the allowable tolerance range.

In one alternative embodiment, between the two units V and V' there is placed a single heating chamber with open ends, and pulleys M may be moved along the axis of said chamber; by bringing the central area of the chamber at the highest temperature of interest (160 °C in the example above), the thermal dispersion at the open ends of the chamber determines a "bell shaped" temperature profile along the single chamber, with a maximum in the middle and regular decreases toward the ends. If the thermal profile of the chamber is known it is possible to move each of the pulleys M to a position in the chamber which is at a desired temperature (for example, the temperatures corresponding to the thirteen chambers of the above-described embodiment). The thermal profile of the chamber can be known by measuring the temperature at a series of points located along the chamber, for example by means of thermocouples or optical pyrometers or other suitable systems; the measurement of the temperature in said series of points may be carried out during a suitable calibration test, or in a continuous manner during the actual wire checking test. Preferably, the points at which the temperature is measured along the chamber are made to correspond to the points where pulleys M are placed.

It is obvious that the embodiments of the method and of the apparatus according to the invention above disclosed and illustrated are only examples susceptible of numerous changes. In particular, several constructive and operative parameters may be changed such as the number of chambers T, the temperature "step" between the chambers, the wire unwinding, winding and supplying units; even the pitch P between adjacent pulleys M may be not-constant as long as it is known. Furthermore, in the embodiment with step temperature profile along the apparatus, chambers T may be dispensed with by using the heating of the wire by Joule effect (at least for the temperature increase):, applying different voltages at different points with which the wire comes into contact (they could be the same pulleys M), it is possible to set preset potential drops in the single parts of the wire and thus, knowing the resistance of the wire, to preset known temperatures in these parts.

Similarly, the velocity may be detected through means different from the above-mentioned pulleys with encoders, for example by means of optical instruments which detect the passage of marks placed on the wire at constant distance, or laser reading optical instruments which do not require the presence of marks on the wire and in which the velocity measurement of the same is based on the Doppler effect.

The apparatus of the invention, in any variant thereof, may further comprise wire marking means, to allow to mark parts of the wire when the parameters measured on these parts reach values outside the allowable tolerance range; these marking means are generally automatically activated when the system detects that these parts of the wire do not meet the specifications.

The apparatus and method of the invention constitute the only known way to provide a wire made of a SMA alloy in which 100% of the wire is certified to have the required characteristics. However, for certain applications having less stringent quality requirements, the method and apparatus of the invention may be used so as to check less than the totality of the wire, e.g., 75% of the wire. This can be done for instance by not passing part of the length of the wire into the system, or by not recording the data measurable by the system for a part of time; in these periods, the wire may travel more quicldy from the input unwinding machine B to the output winding machine B', thus shortening the operation total time. Operating in this way, it is still possible to have a good degree of reliability about the wire properties, sufficient for lower applications, at a lower cost.

## Claims

1. A method for the continuous quality control of a shape memory alloy wire or the like, **characterized by** comprising the following steps:
a) supplying the wire through an apparatus wherein it is subjected to a temperature excursion which covers such a range as to comprise the characteristic transition temperatures of the material the wire is made of;
b) measuring in-line directly or indirectly the length variations of the wire at preset points of said apparatus corresponding to different known temperatures;
c) using the data of temperature and length variation to obtain by points the hysteresis curve of said material in the temperature-elongation diagram.

2. A method according to claim 1, **characterized in that** the wire is supplied with a known velocity and with constant tension, and that the measurement of the length variations is obtained from the sag between different support points placed along the apparatus.

3. A method according to claim 1, **characterized in that** the wire is supplied with a known velocity and with constant tension, and that the measurement of the length variations is obtained by measuring the velocity variations of the wire between different points of the apparatus.

4. An apparatus for the continuous quality control of a wire (F) or the like of shape memory alloy, **characterized by** comprising:
a) means suitable for setting along the wire (F) a known temperature profile in a range encompassing the characteristic transition temperatures of the wire;
b) means suitable for measuring directly or indirectly the length variation of the wire (F) at each of the different temperatures; and
c) wire (F) supplying units (B, B', V, V').

5. An apparatus according to claim 4, wherein the length variation of the wire is measured directly through the measurement by optical means of the sag formed by the wire between different support points set at different temperatures.

6. An apparatus according to claim 4, **characterized in that** the supplying units (B, B', V, V) are suitable for adjusting the tension and the supplying velocity of the wire (F), and wherein the length variation of the wire is measured indirectly through means suitable for measuring the velocity of the wire at different points set at different temperatures.

7. An apparatus according to claim 4, wherein said means suitable for setting a known temperature profile along the wire comprise contact points of the wire set at different electric potential.

8. An apparatus according to claim 4, wherein said means suitable for setting a known temperature profile along the wire comprise one or more thermostatic chambers (T).

9. An apparatus according to claim 4, **characterized by** comprising a plurality of thermostatic chambers (T), in each of which a given temperature is kept constant by means of automatic regulation systems, and wherein said means suitable for measuring directly or indirectly the length variation of the wire are placed in each of said chambers (T).

10. An apparatus according to claim 4, **characterized by** comprising a single thermostatic chamber (T) heated in the central area thereof so as to create a continuous temperature profile in said range, and wherein said means suitable for measuring directly or indirectly the length variation of the wire are placed at preset points along said chamber (T).

11. An apparatus according to claim 10, **characterized in that** it further comprises temperature checking means at preset points along said single thermostatic chamber (T).

12. An apparatus according to claim 10, **characterized in that** said preset temperature check points coincide with the points wherein said means suitable for measuring directly or indirectly the length variation of the wire are placed.

13. An apparatus according to claim 6, **characterized in that** the wire (F) velocity measurement means are idle pulleys (M) whereon the wire (F) is wound without sliding, whose rotational velocity is measured by high-definition encoders.

14. An apparatus according to claim 13, **characterized in that** the pitch (P) between the pulleys (M) is constant.

15. An apparatus according to one of the claims from 4 to 14, **characterized in that** it further comprises wire marking means which are automatically activated if the measured parameters reach values which are outside the allowable tolerance range.

## Patentansprüche

1. Verfahren zur kontinuierlichen Qualitätskontrolle eines Drahtes oder dergleichen aus einer Legierung mit Formgedächtnis, **dadurch gekennzeichnet, dass** es die Schritte:
a) Zuführen des Drahtes durch eine Vorrichtung, in welcher er einem Temperaturanstieg ausgesetzt wird, der einen solchen Bereich umfasst, dass dieser die charakteristischen Übergangstemperaturen des Materials, aus welchem der Draht hergestellt ist, enthält,
b) direktes oder indirektes Messen der Längenveränderung des Drahtes in der Produktionslinie an festgelegten Punkten der Vorrichtung, die verschiedenen bekannten Temperaturen entsprechen, und
c) Verwenden der Werte von Temperatur- und Längenveränderung, um durch Punkte die Hysteresekurve des Materials im Temperatur-Dehnungs-Diagramm zu erhalten,
umfasst.

2. Verfahren nach Anspruch 1, **dadurch gekennzeichnet, dass** der Draht mit einer bekannten Geschwindigkeit und mit bekannter Spannung zugeführt wird, und **dass** die Messung der Längenveränderung aus dem Durchhängen zwischen in der Vorrichtung angeordneten verschiedenen Tragpunkten erhalten wird.

3. Verfahren nach Anspruch 1, **dadurch gekennzeichnet, dass** der Draht mit einer bekannten Geschwindigkeit und mit bekannter Spannung zugeführt wird, und dass die Messung der Längenveränderung durch die Messung der Veränderung der Geschwindigkeit des Drahtes zwischen verschiedenen Punkten der Vorrichtung erhalten wird.

4. Vorrichtung zur kontinuierlichen Qualitätskontrolle eines Drahtes (F) oder dergleichen aus einer Legierung mit Formgedächtnis, **dadurch gekennzeichnet, dass** sie:
a) Mittel, die für die Einstellung eines bekannten Temperaturprofils entlang des Drahtes (F) innerhalb eines Bereichs, der die charakteristischen Übergangstemperaturen des Drahtes enthält, geeignet sind,
b) Mittel, die für die direkte oder indirekte Messung der Längenveränderung des Drahtes (F) bei jeder der verschiedenen Temperaturen geeignet sind, und
c) Draht- (F-) Zuführeinheiten (B, B', V, V')
umfasst.

5. Vorrichtung nach Anspruch 4, worin die Längenveränderung des Drahts durch Messung des Durchhangs des Drahts, der sich zwischen auf unterschiedliche Temperaturen eingestellten verschiedenen Tragpunkten gebildet hat, von optischen Mitteln direkt gemessen wird.

6. Vorrichtung nach Anspruch 4, **dadurch gekennzeichnet, dass** die Zuführeinheiten (B, B', V, V') für die Einstellung von Spannung und Zuführgeschwindigkeit des Drahts (F) geeignet sind und die Längenveränderung des Drahts von Mitteln, die für die Messung der Geschwindigkeit des Drahts an auf unterschiedliche Temperaturen eingestellten verschiedenen Punkten geeignet sind, indirekt gemessen wird.

7. Vorrichtung nach Anspruch 4, worin die Mittel, die für die Einstellung eines bekannten Temperaturprofils entlang des Drahts geeignet sind, auf unterschiedliche elektrische Potentiale eingestellte Kontaktpunkte mit dem Draht umfassen.

8. Vorrichtung nach Anspruch 4, worin die Mittel, die für die Einstellung eines bekannten Temperaturprofils entlang des Drahts geeignet sind, eine oder mehrere thermostatierte Kammern (T) umfassen.

9. Vorrichtung nach Anspruch 4, **dadurch gekennzeichnet, dass** sie eine Vielzahl thermostatierter Kammern (T) umfasst, wobei in jeder davon von automatischen Regelungssystemen eine gegebene Temperatur konstantgehalten wird und die Mittel, die für die direkte oder indirekte Messung der Längenveränderung des Drahts geeignet sind, in jeder dieser Kammern (T) angeordnet sind.

10. Vorrichtung nach Anspruch 4, **dadurch gekennzeichnet, dass** sie eine einzige thermostatierte Kammer (T) umfasst, deren Mitte derart erhitzt worden ist, dass ein kontinuierliches Temperaturprofil in obigem Bereich erzeugt wird, und die Mittel, die für die direkte oder indirekte Messung der Längenveränderung des Drahts geeignet sind, an festgelegten Punkten in dieser Kammer (T) angeordnet sind.

11. Vorrichtung nach Anspruch 10, **dadurch gekennzeichnet, dass** sie außerdem in der einzigen thermostatierten Kammer (T) an festgelegten Punkten Temperaturkontrollmittel umfasst.

12. Vorrichtung nach Anspruch 10, **dadurch gekennzeichnet, dass** die festgelegten Temperaturkontrollpunkte mit den Punkten übereinstimmen, an welchen die Mittel, die für die direkte oder indirekte Messung der Längenveränderung des Drahts geeignet sind, angeordnet sind.

13. Vorrichtung nach Anspruch 6, **dadurch gekennzeichnet, dass** die Mittel zur Messung der Geschwindigkeit des Drahts (F) bewegliche Rollen (M) sind, über welche der Draht (F) ohne Rutschen läuft und deren Umdrehungsgeschwindigkeit von High-Definition Encodern gemessen wird.

14. Vorrichtung nach Anspruch 13, **dadurch gekennzeichnet, dass** der Abstand (P) zwischen den Rollen (M) konstant ist.

15. Vorrichtung nach einem der Ansprüche 4 bis 14, **dadurch gekennzeichnet, dass** sie weiterhin Drahtkennzeichnungsmittel umfasst, die automatisch aktiviert werden, wenn die gemessenen Parameter Werte erreichen, die sich außerhalb des erlaubten Toleranzbereichs befinden.

## Revendications

1. Procédé pour le contrôle qualité continu d'un fil en alliage à mémoire de forme ou équivalent, **caractérisé en ce qu'**il comprend les étapes suivantes :
a) alimenter le fil à travers un appareil dans lequel il est soumis à une variation de température qui couvre un domaine tel qu'il comprend les températures de transition caractéristiques du matériau dont le fil est composé;
b) mesurer directement ou indirectement en ligne les variations de longueur du fil en des points prédéterminés dudit appareil correspondant à différentes températures connues ;
c) utiliser les données de température et de variation de longueur pour obtenir par des points la courbe d'hystérésis dudit matériau dans le diagramme température-allongement.

2. Procédé selon la revendication 1, **caractérisé en ce que** le fil est alimenté avec une vitesse connue et avec une tension constante, et **en ce que** la mesure des variations de longueur est obtenue depuis le point d'inflexion entre différents points supports placés le long de l'appareil.

3. Procédé selon la revendication 1, **caractérisé en ce que** le fil est alimenté avec une vitesse connue et avec une tension constante, et **en ce que** la mesure des variations de longueur est obtenue en mesurant les variations de vitesse du fil entre différents points de l'appareil.

4. Appareil pour le contrôle qualité continu d'un fil (F) ou similaire d'un alliage à mémoire de forme, **caractérisé en ce qu'**il comprend :
a) des moyens appropriés pour établir le long du fil (F) un profil de température connu dans un domaine englobant les températures de transition caractéristiques du fil;
b) des moyens appropriés pour mesurer directement ou indirectement la variation de longueur du fil (F) à chacune des températures différentes ; et
c) des unités (B, B', V, V') d'alimentation de fil (F).

5. Appareil selon la revendication 4, dans lequel la variation de longueur du fil est mesurée directement à travers la mesure par des moyens optiques du point d'inflexion formé par le fil entre différents points supports établis à différentes températures.

6. Appareil selon la revendication 4, **caractérisé en ce que** les unités d'alimentation (B, B', V, V') sont appropriées pour ajuster la tension et la vitesse d'alimentation du fil (F) et dans lequel la variation de longueur du fil est mesurée indirectement à travers des moyens appropriés pour mesurer la vitesse du fil en différents points réglés à différentes températures.

7. Appareil selon la revendication 4, dans lequel lesdits moyens appropriés pour établir un profil de température connu le long du fil comprennent des points de contact du fil réglés sur un potentiel électrique différent.

8. Appareil selon la revendication 4, dans lequel lesdits moyens appropriés pour établir un profil de température connu le long du fil comprennent une ou plusieurs chambre(s) thermostatique(s) (T).

9. Appareil selon la revendication 4, **caractérisé en ce qu'**il comprend une pluralité de chambres thermostatiques (T), dans chacune desquelles une température donnée est maintenue constante au moyen de systèmes de régulation automatique, et dans lequel lesdits moyens appropriés pour mesurer directement ou indirectement la variation de longueur du fil sont placés dans chacune desdites chambres (T).

10. Appareil selon la revendication 4, **caractérisé en ce qu'**il comprend une seule chambre thermostatique (T) chauffée dans la zone centrale de celle-ci de façon à créer un profil de température continu dans ledit domaine, et dans lequel lesdits moyens appropriés pour mesurer directement ou indirectement la variation de longueur du fil sont placés en des points pré-établis le long de ladite chambre (T).

11. Appareil selon la revendication 10, **caractérisé en ce qu'**il comprend en outre des moyens de vérification de température en des points pré-établis le long de ladite seule chambre thermostatique (T).

12. Appareil selon la revendication 10, **caractérisé en ce que** lesdits points de vérification de température pré-établis coïncident avec les points auxquels lesdits moyens appropriés pour mesurer directement ou indirectement la variation de longueur du fil sont placés.

13. Appareil selon la revendication 6, **caractérisé en ce que** les moyens de mesure de la vitesse du fil (F) sont des poulies libres (M) sur lesquelles le fil (F) est enroulé sans glisser, dont la vitesse rotationnelle est mesurée par encodeurs haute définition.

14. Appareil selon la revendication 13, **caractérisé en ce que** le pas (P) entre les poulies (M) est constant.

15. Appareil selon l'une des revendications 4 à 14, **caractérisé en ce qu'**il comprend en outre des moyens de marquage de fil qui sont activés automatiquement si les paramètres mesurés atteignent des valeurs qui sont à l'extérieur du domaine de tolérance admissible.
